# EUROPEAN PATENT APPLICATION

(11) **EP 4 641 669 A1**
(43) Date of publication of application: **29.10.2025**
(21) Application number: 24759514.3
(22) Date of filing: 02.02.2024
(51) Int. Cl.: H01M 4/36, H01M 4/38, H01M 4/62, H01M 10/0525, H01M 4/13, H01M 4/139, H01M 4/04, H01M 10/058, H01M 10/42, H01M 50/574, H01M 50/583, H01M 10/613, H01M 10/625, H01M 10/647, H01M 10/6554, H01M 10/6551, H01M 10/052, H01J 7/00

(54) **SILICON-CARBON BATTERY, BATTERY PACK, ENERGY STORAGE DEVICE, ELECTRIC TOOL, AND BATTERY PACK CHARGER**

(30) Priority: 24.02.2023 CN 202310160425
(71) Applicant: Nanjing Chervon Industry Co., Ltd., Nanjing, Jiangsu 211106 (CN)
(72) Inventor: YUAN, Yongjie, Nanjing, Jiangsu 211106 (CN); XU, Guofang, Nanjing, Jiangsu 211106 (CN)
(74) Representative: Sun, Yiming
(86) International application number: PCT/CN2024/075432
(87) International publication number: WO 2024/174837

(57) **Abstract**

Provided are a silicon-carbon battery cell for a power tool, a battery pack, an energy storage device, a power tool, and a charger for a battery pack. The silicon-carbon battery cell includes: a positive electrode plate (1311); a negative electrode plate (1312) including a silicon material, a carbon material, and a binder; and an electrolyte (1314) disposed between the negative electrode plate (1312) and the positive electrode plate (1311). The binder includes polyacrylic acid and styrene-butadiene rubber.

## Description

This application claims priority to Chinese Patent Application No. 202310160425.8 filed with the China National Intellectual Property Administration (CNIPA) on Feb. 24, 2023, the disclosure of which is incorporated herein by reference in its entirety.

### TECHNICAL FIELD

The present application relates to batteries and power tools, for example, a silicon-carbon battery cell for a power tool, a battery pack, an energy storage device, a power tool, and a charger for a battery pack.

### BACKGROUND

With the development of battery technology, engine tools are gradually replaced with power tools. In order that a cordless power tool has a better use effect, a battery pack is required to have higher output performance. For example, for the achievement of a working effect and a battery lifetime similar to those of an engine tool, increasingly high requirements are placed on the performance of the battery pack, such as the energy density and the cycle life.

### SUMMARY

The present application provides a silicon-carbon battery cell for a power tool, a battery pack, an energy storage device, a power tool, and a charger for a battery pack, where the silicon-carbon battery cell has a higher energy density and a longer cycle life.

The present application provides a silicon-carbon battery cell for a power tool. The silicon-carbon battery cell includes: a positive electrode plate; a negative electrode plate including a silicon material, a carbon material, and a binder; and an electrolyte disposed between the negative electrode plate and the positive electrode plate. The binder includes polyacrylic acid and styrene-butadiene rubber.

In some examples, the content of the silicon material in the negative electrode plate is 1% to 5%.

In some examples, the content of the polyacrylic acid in the material of the binder is 0.2% to 1.5%.

In some examples, the material of the positive electrode plate includes lithium nickel manganese cobalt oxide, carbon black, a carbon nanotube, sodium carboxymethyl cellulose, and styrene-butadiene rubber.

In some examples, the material of the electrolyte includes lithium hexafluorophosphate.

In some examples, the silicon-carbon battery cell has a cylindrical or prismatic shape.

In some examples, the silicon-carbon battery cell is a pouch cell.

The present application further provides a silicon-carbon battery cell for a power tool. The silicon-carbon battery cell includes: a positive electrode plate; a negative electrode plate; and an electrolyte disposed between the negative electrode plate and the positive electrode plate. The surface of the negative electrode plate includes a microbubble structure.

In some examples, slurry coated on the negative electrode plate contains a foaming agent.

In some examples, the material of the negative electrode plate includes silicon-carbon, graphite, carbon black, a carbon nanotube, sodium carboxymethyl cellulose, and styrene-butadiene rubber.

In some examples, the material of the positive electrode plate includes lithium nickel manganese cobalt oxide, carbon black, a carbon nanotube, sodium carboxymethyl cellulose, and styrene-butadiene rubber.

In some examples, the material of the electrolyte includes lithium hexafluorophosphate.

In some examples, the capacity of the battery cell is greater than or equal to 5 ampere-hours.

In some examples, the battery cell has a cylindrical or prismatic shape.

In some examples, the battery cell is a pouch cell.

The present application further provides a battery pack for a power tool. The battery pack includes: a battery housing; a battery module disposed in an inner cavity of the battery housing, where the battery module includes multiple battery cells; a support member configured to support the multiple battery cells and apply pressure to the multiple battery cells; a control circuit configured to monitor and control a charging process of the battery module and a discharging process of the battery module; and a tool interface configured to be connected to the power tool, where the tool interface is electrically connected to the control circuit. The battery module includes at least one silicon-carbon battery cell.

In some examples, the battery cells have a cylindrical or prismatic shape.

In some examples, the multiple battery cells are pouch cells.

In some examples, the shape of the support member matches the shape of each of the multiple battery cells.

In some examples, the gap between the support member and each of the multiple battery cells is less than or equal to 0.5 millimeters.

In some examples, the support member is made of metal or plastic.

The present application further provides a battery pack for a power tool. The battery pack includes: a battery housing; a battery module disposed in an inner cavity of the battery housing, where the battery module includes multiple battery cells; a control circuit configured to monitor and control a charging state of the battery module and a discharging state of the battery module; and a tool interface configured to be electrically connected to the power tool, where the tool interface is electrically connected to the control circuit. The battery module includes at least one silicon-carbon battery cell. The ratio of the length of the battery pack to the thickness of the battery pack is 1 to 10, and the energy W of the battery pack and the volume V1 of the battery pack satisfy the following: in the case where the energy W of the battery pack is greater than or equal to 200 W, the volume V1 of the battery pack is less than or equal to 350 cubic centimeters; in the case where the energy W of the battery pack is greater than or equal to 300 W, the volume V1 of the battery pack is less than or equal to 550 cubic centimeters; and in the case where the energy W of the battery pack is greater than or equal to 700 W, the volume V1 of the battery pack is less than or equal to 1200 cubic centimeters.

In some examples, the gap between battery cells is less than or equal to 0.5 millimeters.

In some examples, the battery cells have a cylindrical or prismatic shape.

In some examples, the multiple battery cells are pouch cells.

In some examples, at least two of the multiple battery cells have different shapes.

The present application further provides an energy storage device. The energy storage device includes: a device housing; a battery module disposed in an inner cavity of the device housing, where the battery module includes multiple battery cells; and a control circuit configured to monitor and control a charging state of the battery module and a discharging state of the battery module. The battery module includes at least one silicon-carbon battery cell. The energy storage device further includes: a display module configured to display the number of remaining cycles of the battery module, where the display module is electrically connected to the control circuit.

In some examples, the display module includes a display screen.

In some examples, the display module includes a segment code screen.

In some examples, the display module is configured to display the number of performed cycles of the battery module.

The present application further provides a power tool. The power tool includes: a tool housing; a power supply module including a first battery pack and a second battery pack; a terminal module electrically connected to the power supply module; and a control module configured to monitor and control a charging state of the power supply module and a discharging state of the power supply module, where the control module is electrically connected to the terminal module. The first battery pack includes a silicon-carbon battery. The control module is configured to: control the first battery pack to be charged and discharged with a first control method in the case where the terminal module is electrically connected to the first battery pack; and control the second battery pack to be charged and discharged with a second control method in the case where the terminal module is electrically connected to the second battery pack.

In some examples, the terminal module includes a positive terminal, a negative terminal, and a communication terminal.

In some examples, the control module is configured to monitor and display a battery characteristic of the first battery pack and/or a battery characteristic of the second battery pack.

In some examples, the battery characteristic of the first battery pack and/or the battery characteristic of the second battery pack include a voltage and a temperature of the first battery pack and/or a voltage and a temperature of the second battery pack.

In some examples, the first battery pack includes a first electrical connection structure electrically connected to the power tool, and the second battery pack includes a second electrical connection structure electrically connected to the power tool, where the first electrical connection structure and the second electrical connection structure have different connection structures.

In some examples, the control module is configured to: control the power supply module to be charged and discharged with the first control method in the case where the terminal module is electrically connected to the first electrical connection structure; and control the power supply module to be charged and discharged with the second control method in the case where the terminal module is electrically connected to the second electrical connection structure.

**In** some examples, a structure electrically connecting the first battery pack to the power tool is the same as a structure electrically connecting the second battery pack to the power tool, the first battery pack has a first battery characteristic, the second battery pack has a second battery characteristic, and the control module is further configured to identify a battery characteristic of a battery pack electrically connected to the terminal module.

In some examples, the control module is configured to: control the power supply module to be charged and discharged with the first control method in the case where the battery pack electrically connected to the terminal module has the first battery characteristic; and control the power supply module to be charged and discharged with the second control method in the case where the battery pack electrically connected to the terminal module has the second battery characteristic.

In some examples, the battery characteristic includes a voltage and a temperature of the first battery pack and/or a voltage and a temperature of the second battery pack.

In some examples, the second battery pack includes at least one battery cell from a lithium-ion battery, a sodium-ion battery, a lead-acid battery, and a silicon-carbon battery.

The present application further provides a charger for a battery pack of a power tool. The power tool includes a first battery pack and a second battery pack, and the first battery pack includes a silicon-carbon battery. The charger includes: a charger housing; a charger terminal module configured to be electrically connected to the battery pack; and a charging control module configured to monitor and control a charging state of the battery pack electrically connected to the charger terminal module, where the charging control module is electrically connected to the charger terminal module. The charging control module is configured to: control the first battery pack to be charged with a first charging method in the case where the charger terminal module is electrically connected to the first battery pack; and control the second battery pack to be charged with a second charging method in the case where the charger terminal module is electrically connected to the second battery pack.

In some examples, the charging control module is configured to monitor and display a battery characteristic of the battery pack electrically connected to the charger terminal module.

In some examples, the battery characteristic includes a voltage and a temperature of the battery pack electrically connected to the charger terminal module.

In some examples, the first battery pack includes a first electrical connection structure configured to be electrically connected to the power tool, and the second battery pack includes a second electrical connection structure configured to be electrically connected to the power tool, where the first electrical connection structure and the second electrical connection structure have different connection structures. The charging control module is configured to: control the battery pack to be charged and discharged with the first charging method in the case where the charger terminal module is electrically connected to the first electrical connection structure; and control the battery pack to be charged and discharged with the second charging method in the case where the charger terminal module is electrically connected to the second electrical connection structure.

In some examples, a structure electrically connecting the first battery pack to the power tool is the same as a structure electrically connecting the second battery pack to the power tool, the first battery pack has a first battery characteristic, the second battery pack has a second battery characteristic, the first battery characteristic and/or the second battery characteristic include a voltage and a temperature of the first battery pack and/or a voltage and a temperature of the second battery pack, and the charging control module is further configured to identify a battery characteristic of the battery pack electrically connected to the charger terminal module.

In some examples, the charging control module is configured to: control the battery pack to be charged with the first charging method in the case where the battery pack electrically connected to the charger terminal module has the first battery characteristic; and control the battery pack to be charged with the second charging method in the case where the battery pack electrically connected to the charger terminal module has the second battery characteristic.

In some examples, the second battery pack includes at least one battery cell from a lithium-ion battery, a sodium-ion battery, a lead-acid battery, and a silicon-carbon battery.

### BRIEF DESCRIPTION OF DRAWINGS

FIG. 1 is a schematic view showing application scenarios of a battery pack in the present application.
FIG. 2 is a perspective view of a power tool according to an example of the present application from a viewing angle.
FIG. 3 is a plan view of the power tool in FIG. 2 from a viewing angle.
FIG. 4 is a perspective view of a battery module according to an example of the present application from a viewing angle.
FIG. 5 is a perspective view of a battery cell according to an example of the present application from a viewing angle.
FIG. 6 is a structural view of a power tool according to an example of the present application.
FIG. 7 is a perspective view of a battery pack according to an example of the present application from a viewing angle.
FIG. 8 is an exploded view of a battery pack according to an example of the present application from a viewing angle.
FIG. 9 is a perspective view of a battery pack according to an example of the present application from a viewing angle.
FIG. 10 is an exploded view of a battery pack according to an example of the present application from a viewing angle.
FIG. 11 is a perspective view of an energy storage device according to an example of the present application from a viewing angle.
FIG. 12 is a perspective view of the energy storage device in FIG. 11 with part of the housing removed from a viewing angle.
FIG. 13 is a plan view showing a power tool and two battery packs according to an example of the present application from a viewing angle.
FIG. 14 is a perspective view of a riding mower according to an example of the present application from a viewing angle.
FIG. 15 is a schematic view showing part of the structures of a riding mower in FIG. 14.
FIG. 16 is a schematic view showing that a robotic mower works according to an example of the present application.
FIG. 17 is a perspective view of a robotic mower according to an example of the present application from a viewing angle.
FIG. 18 is a perspective view of the robotic mower in FIG. 17 with part of the housing removed from a viewing angle.
FIG. 19 is a perspective view showing a charger and a battery pack according to an example of the present application from a viewing angle.
FIG. 20 is a perspective view of a charger according to an example of the present application from a viewing angle.
FIG. 21 is a perspective view showing a charger and two battery packs according to an example of the present application from a viewing angle.

### DETAILED DESCRIPTION

The present application is described below in conjunction with the drawings and examples. The examples described herein are intended to explain the present application and not to limit the present application. For ease of description, only part, not all, of structures or steps related to the present application are illustrated in the drawings.

It is to be understood by those skilled in the art that in the disclosure of the present application, orientations or position relations indicated by terms such as "up", "down", "front", "rear", "left", and "right" are based on the drawings. These orientations or position relations are intended only to facilitate and simplify the description of the present application and not to indicate or imply that a device or element referred to must have such particular orientations or must be configured or operated in such particular orientations. Thus, the terms are not to be construed as limiting the present application.

A silicon-carbon battery refers to a novel lithium battery with a negative electrode made of a silicon-carbon composite material. The silicon-carbon battery has the advantage of high lithium storage capacity and has a promising application prospect in the field of power tools. However, the silicon-carbon battery also has the problem that the volume of a silicon particle is increased and decreased during lithium deintercalation, resulting in particle pulverization, detachment, and the failure of electrochemical performance, thereby hindering the silicon-carbon battery from being applied in power tools. The present application provides a silicon-carbon battery cell. The silicon-carbon battery cell contains a novel binder that better matches the performance of a silicon-carbon material. The novel binder can inhibit the expansion of a silicon-carbon negative electrode particle and prolongs the cycle life of the silicon-carbon battery. The present application also provides a battery pack containing the silicon-carbon battery, an energy storage device, a power tool such as a mower, and a charger.

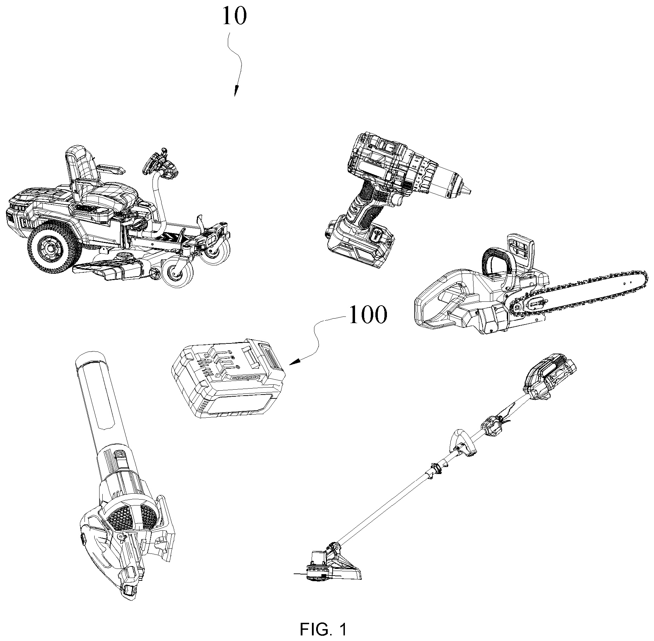

As shown in FIG. 1, a power tool 10 in the present application may be a handheld power tool or a garden tool, which is not limited herein. The power tool 10 in the present application includes, but is not limited to, a power tool that requires speed regulation, such as a screwdriver, an electric drill, a wrench, and an angle grinder, a sander and another power tool that may be used for grinding workpieces, a reciprocating saw, a circular saw, a jigsaw, and another power tool that may be used for cutting workpieces, and an electric hammer and another power tool that may be used for impact. These tools may be garden tools, such as pruners, chainsaws, riding mowers, and automatic robotic mowers. As long as these power tools can adopt the essence of the technical solutions disclosed below, these power tools are within the scope of the present application.

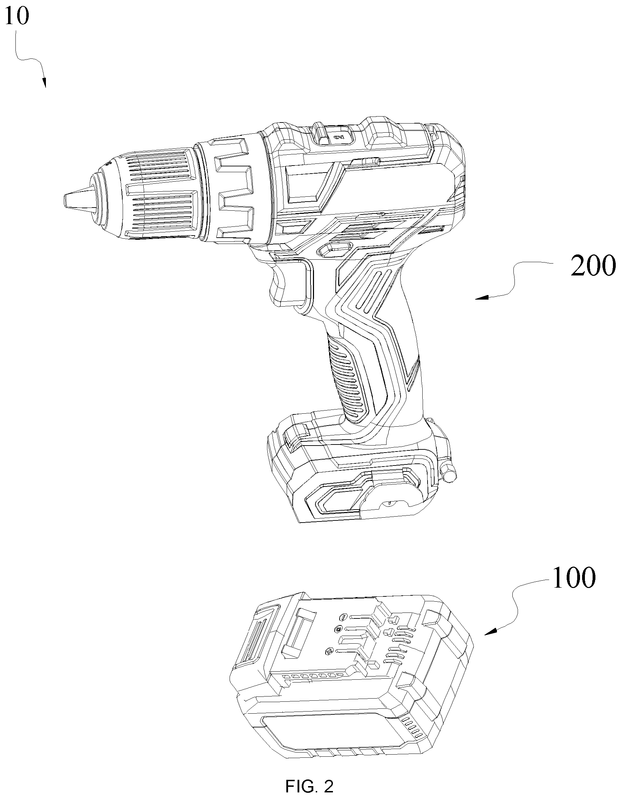

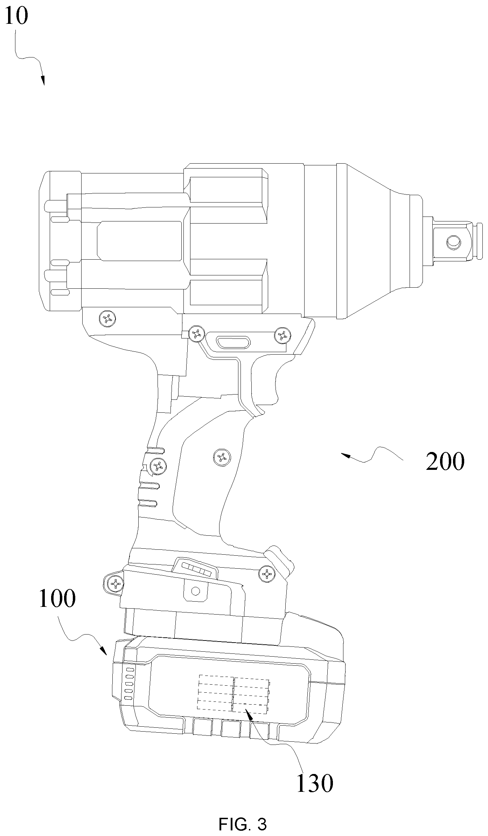

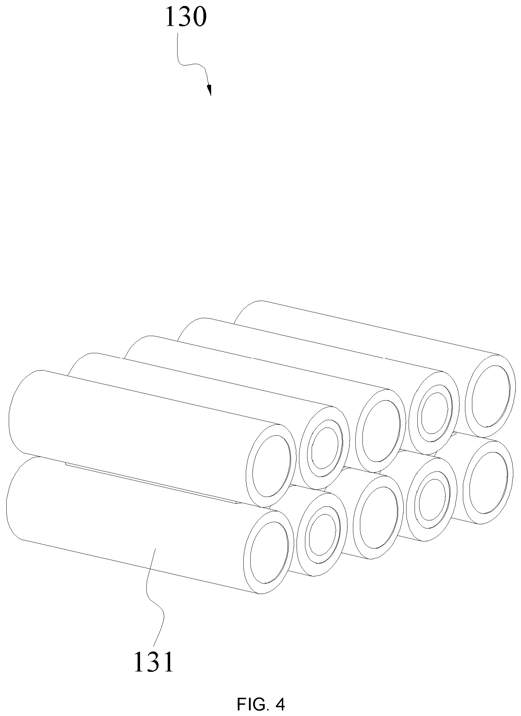

As shown in FIGS. 2 to 4, the power tool 10 includes a battery pack 100 and a tool body 200. The battery pack 100 is configured to supply power to the tool body 200. The battery pack 100 includes a battery module 130. The battery module 130 may be understood as an intermediate unit formed by multiple battery cells 131 connected in series and parallel, where the intermediate unit is between a battery cell 131 and the battery pack 100. Each of the battery cells 131, also referred to as a cell, is the smallest unit of a battery system and is mainly constituted by a positive electrode, a negative electrode, an electrolyte, a separator, and a cell housing. The shape of the battery cell 131 is not limited in the present application. In the present application, the battery cell 131 may be a hard-case battery. For example, the battery pack 131 has a cylindrical or prismatic shape. Alternatively, the battery cell 131 may be a pouch cell.

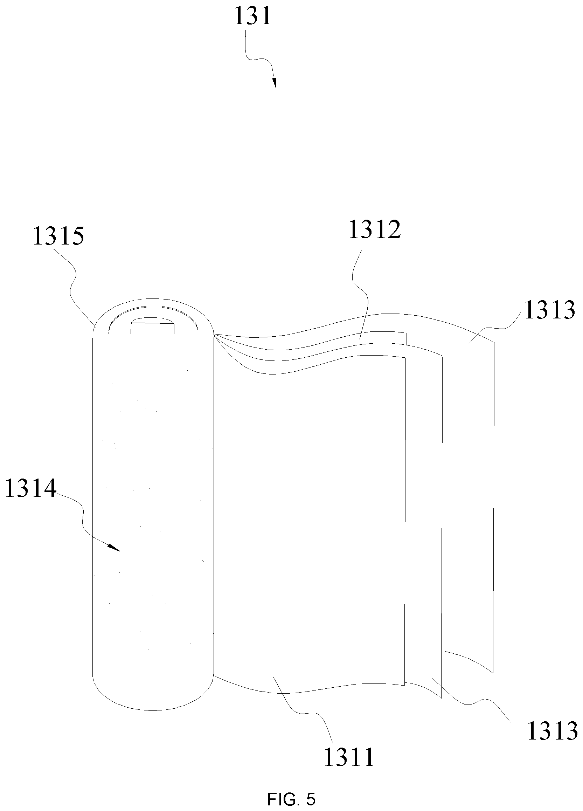

The battery module 130 includes the multiple battery cells 131, and at least one of the battery cells 131 is a silicon-carbon battery. As shown in FIG. 5, the battery cell 131 includes a positive electrode plate 1311, a negative electrode plate 1312, a separator 1313 and an electrolyte 1314 that are disposed between the negative electrode plate 1312 and the positive electrode plate 1311, and a cell housing 1315.

The present application provides a silicon-carbon battery with a long cycle life. In this example, the negative electrode plate 1312 of the silicon-carbon battery cell 131 includes a silicon material, a carbon material, and a binder. The binder is an aqueous binder. For example, the binder includes polyacrylic acid and styrene-butadiene rubber. The binder has good bonding performance, can effectively inhibit the expansion of the silicon-carbon negative electrode particle, and reduces the risk that the volume of the silicon-carbon negative electrode particle of the silicon-carbon battery is increased during lithium deintercalation, resulting in particle pulverization, detachment, and the failure of electrochemical performance. Thus, the cycle life of the silicon-carbon battery is prolonged, thereby helping apply the silicon-carbon battery in power tools.

In some examples, the content of the silicon material in the negative electrode plate 1312 is 1% to 5%. The content of the polyacrylic acid in the material of the binder is 0.2% to 1.5%. The material of the positive electrode plate 1311 includes lithium nickel manganese cobalt oxide, carbon black, a carbon nanotube, sodium carboxymethyl cellulose, and styrene-butadiene rubber. The material of the electrolyte includes lithium hexafluorophosphate.

The present application further provides a technical solution capable of solving the technical problem that the volume of the silicon-carbon negative electrode particle of the silicon-carbon battery is increased during the lithium deintercalation, resulting in the particle pulverization. The portions in the preceding example that are compatible with this example may be applied to this example, and only the differences between this example and the preceding example are described below.

This example provides the silicon-carbon battery cell 131, and the surface of the negative electrode plate 1312 of the silicon-carbon battery cell 131 has a microbubble structure. The microbubble structure can allow the negative electrode plate 1312 containing a silicon-carbon material to bear more body expansion in a charging process or a discharging process without rapid pulverization, thereby prolonging the cycle life of the silicon-carbon battery. Moreover, the microbubble structure can allow more electrolytes to be immersed into the battery, thereby improving the rate capability of the silicon-carbon battery.

In some examples, a foaming agent may be added to the slurry coated on the surface of the negative electrode plate 1312 so that the surface of the negative electrode plate 1312 is formed with the microbubble structure. Exemplarily, the foaming agent may include sodium nitrite, an azo compound, or a sulfonyl hydrazide compound.

In some examples, the capacity of the silicon-carbon battery cell 131 may be greater than or equal to 5 ampere-hours so that the silicon-carbon battery cell 131 can supply sufficient power to the power tool 10.

The present application provides the battery pack 100 for a power tool. The battery pack 100 may include the silicon-carbon battery cell 131 in any one of the preceding examples. The shape of the battery pack 100 is not limited in the present application. The portions in the preceding example that are compatible with this example may be applied to this example.

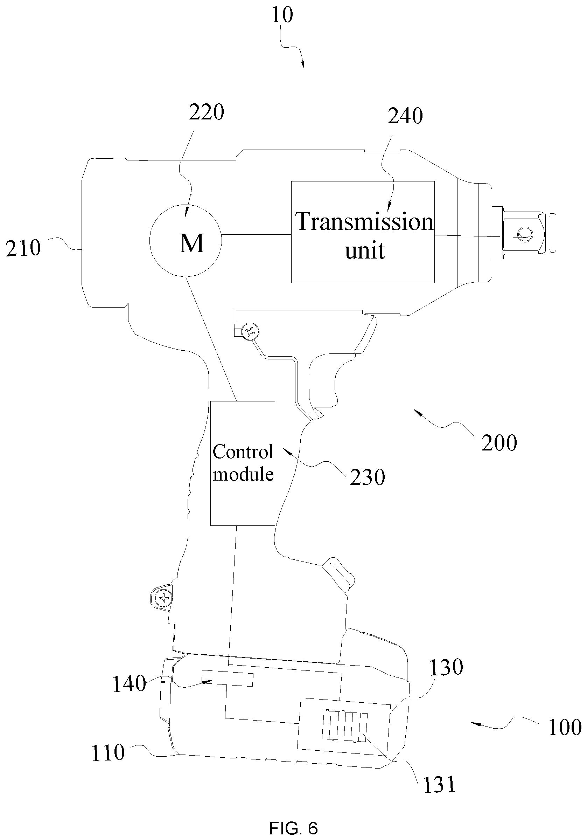

As shown in FIG. 6, the tool body 200 of the power tool 10 includes at least a tool housing 210, an electric motor 220, and a control module 230. The electric motor 220 is disposed in the tool housing 210. The control module 230 is electrically connected to the electric motor 220 and drives the electric motor 220. The battery pack 100 of the power tool 10 supplies power to at least the control module 230. The battery pack 100 can store electrical energy to supply power to the power tool 10.

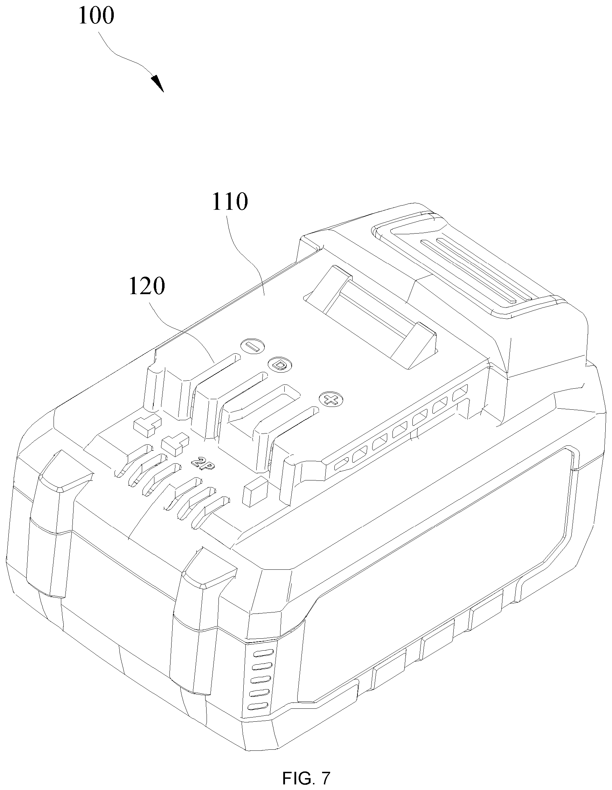

In this example, as shown in FIG. 7, the battery pack 100 has a battery housing 110. A tool interface is provided on the battery housing 110. The tool interface is connectable to a terminal on the power tool 10, a charger, or an adapter so that the electrical energy stored in the battery pack 100 is outputted to the power tool 10 or the battery pack 100 is charged through the charger. In an example, the tool interface may be a terminal assembly 120. The terminal assembly 120 may include connection terminals such as a positive terminal, a negative terminal, and a communication terminal. In this example, the terminal assembly 120 is electrically connected to the battery module 130 in the battery pack 100 so that power stored in the battery cells 131 can be transmitted to the power tool 10 connected to the terminal assembly 120 or power transmitted by the charger is transmitted to the battery cells 131 to charge the battery cells 131. The battery module 130 includes at least one silicon-carbon battery cell 131 in any of the preceding examples.

The battery pack 100 further includes a control circuit 140. The control circuit 140 is disposed in the battery housing 110 and is electrically connected to the terminal assembly 120 and the battery module 130. The control circuit 140 can be electrically connected to the tool body 200 through the terminal assembly 120. The control circuit 140 uses the battery module 130 to supply power to the tool body 200 and may be further configured to monitor and control a charging process of the battery module 130 and a discharging process of the battery module 130.

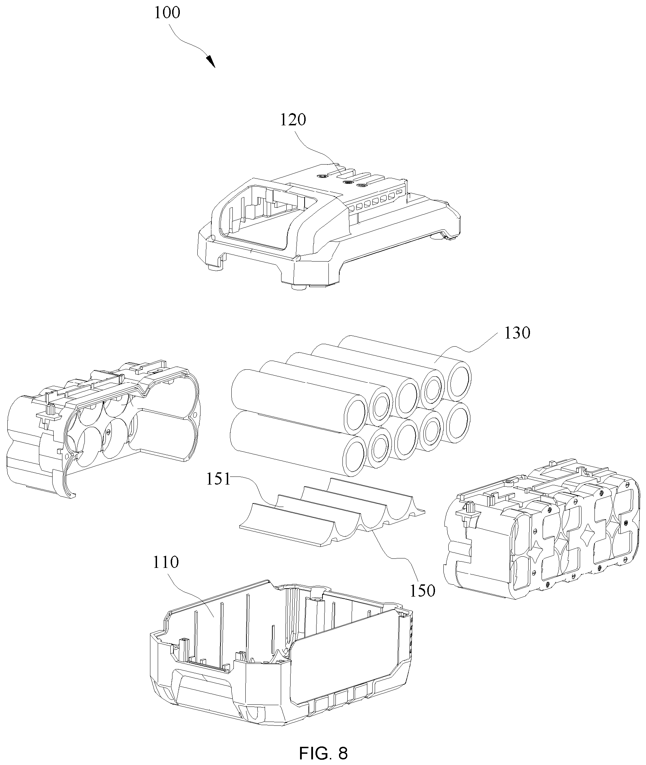

In some examples, as shown in FIG. 8, the battery pack 100 includes a support member 150 configured to support the battery cells 131. The support member 150 applies pressure to the battery cells 131 when supporting the battery cells 131.

In some examples, the shape of the support member 150 matches the shape of each of the battery cells 131. Exemplarily, the support member 150 includes support portions 151 configured to support the battery cells 131. The shape of each of the support portions 151 matches the shape of each of the battery cells 131. For example, if the battery cells 131 are cylinders, the support portions 151 may be grooves that can fit snugly around the cylinders. Optionally, the gap between the support member 150 and each of the battery cells 131 may be less than or equal to 0.5 millimeters. Optionally, the support member 150 may be made of metal or plastic.

In the present application, the silicon-carbon battery is adopted so that the battery pack 100 has a small volume, thereby helping implement the miniaturization and light load of the power tool 10 and then helping a user to use the power tool 10. The battery pack 100 is used as a power source of the power tool 10, so the energy and volume of the battery pack 100 are two critical factors that affect user experience. The battery pack 100 with a small volume and a large amount of energy is more convenient for the user to use. However, if the volume of the battery pack 100 is required to be excessively small or the output energy of the battery pack 100 is required to be excessively large, excessively high requirements are imposed on the improvement of the manufacturing process and structure of the battery pack 100.

The present application provides an example. The portions in the preceding examples that are compatible with this example may be applied to the battery pack 100 in this example. Only the differences between this example and the preceding examples are described below.

The energy of a battery refers to electrical energy outputted by the battery doing work under a certain discharging condition, commonly expressed in a watt-hour (W·h) or a kilowatt-hour (kW·h). In this example, the ratio of the length of the battery pack 100 to the thickness of the battery pack 100 is 1 to 10. Moreover, in this example, the configuration of the energy W of the battery pack 100 and the configuration of the volume of the battery pack 100 can enable the power tool 10 to not only meet the requirement of the user on the energy but also meet the requirement of the user on the volume of the power tool 10 and are conducive to further facilitating the miniaturization of the power tool 10.

In some examples, when the energy W of the battery pack 100 is greater than or equal to 200 watt-hours, the volume V1 of the battery pack 100 is less than or equal to 350 cubic centimeters. In an example, the voltage of the battery pack 100 may be 18 volts (V) or 20 volts, the capacity of the battery pack 100 may be 8 ampere-hours (A·h), and the volume of the battery pack 100 may be less than or equal to 350 cubic centimeters. In other examples, optionally, the energy of the battery pack 100 may be 100 watt-hours, 144 watt-hours, 150 watt-hours, 160 watt-hours, or 200 watt-hours, and the volume of the battery pack 100 may be 150 cubic centimeters, 200 cubic centimeters, 288 cubic centimeters, 300 cubic centimeters, 320 cubic centimeters, or 350 cubic centimeters.

In some examples, when the energy W of the battery pack 100 is greater than or equal to 300 watt-hours, the volume V1 of the battery pack 100 is less than or equal to 550 cubic centimeters. In an example, the voltage of the battery pack 100 may be 24 volts, the capacity of the battery pack 100 may be 12 ampere-hours, and the volume of the battery pack 100 may be less than or equal to 550 cubic centimeters. In other examples, optionally, the energy of the battery pack 100 may be 288 watt-hours, 300 watt-hours, 350 watt-hours, or 400 watt-hours, and the volume of the battery pack 100 may be 400 cubic centimeters, 450 cubic centimeters, 500 cubic centimeters, or 550 cubic centimeters.

In some examples, when the energy W of the battery pack 100 is greater than or equal to 700 watt-hours, the volume V1 of the battery pack 100 is less than or equal to 1200 cubic centimeters. In an example, the voltage of the battery pack 100 may be 56 volts, the capacity of the battery pack 100 may be 12 ampere-hours, and the volume of the battery pack 100 may be less than or equal to 1200 cubic centimeters. In other examples, optionally, the energy of the battery pack 100 may be 700 watt-hours, 800 watt-hours, 900 watt-hours, or 1000 watt-hours, and the volume of the battery pack 100 may be 900 cubic centimeters, 1000 cubic centimeters, 1100 cubic centimeters, or 1200 cubic centimeters.

The preceding examples can enable the power tool 10 to not only meet the requirement of the user on the energy but also meet the requirement of the user on the volume of the power tool 10 and are conducive to further facilitating the miniaturization of the power tool.

The battery pack is a mature energy storage device, and it is very difficult to change the structure or process of the battery pack. In addition to the battery module 130, functional components are also typically included in the battery pack 100 such as the terminal assembly 120, a battery monitoring and management device, a current transmission member, and assemblies for collecting and transmitting electrical signals and temperature signals. These functional components occupy part of the volume of the battery pack 100, and the battery module 130 constituted by the battery cells 131 occupies most of the remaining volume. For the battery pack 100, the higher the ratio of the volume of the battery module 130 to the volume of the battery pack 100, the higher the volumetric energy density of the battery pack 100. However, stricter requirements are also imposed on the miniaturization of the functional components in the battery pack 100, making it more difficult to improve the structure in the battery pack 100.

In the example of the present application, the gap between battery cells 131 is configured to be less than or equal to 0.5 millimeters so that the ratio of the volume of the battery module 130 to the volume of the battery pack 100 is relatively high. Thus, the use requirement of the user on the miniaturization of the power tool 10 can be met, and this configuration avoids an excessively high requirement and is easy to implement. In other examples, the battery module 130 may include battery cells 131 in different shapes, and the gap between the battery cells 131 is reduced through the fit between the different shapes.

In some working conditions, the energy of the battery pack 100 is insufficient to drive the power tool 10 to work at high power for a long time. If the power tool 10 is caused to stop working to charge the battery pack 100, the user's work efficiency is hindered.

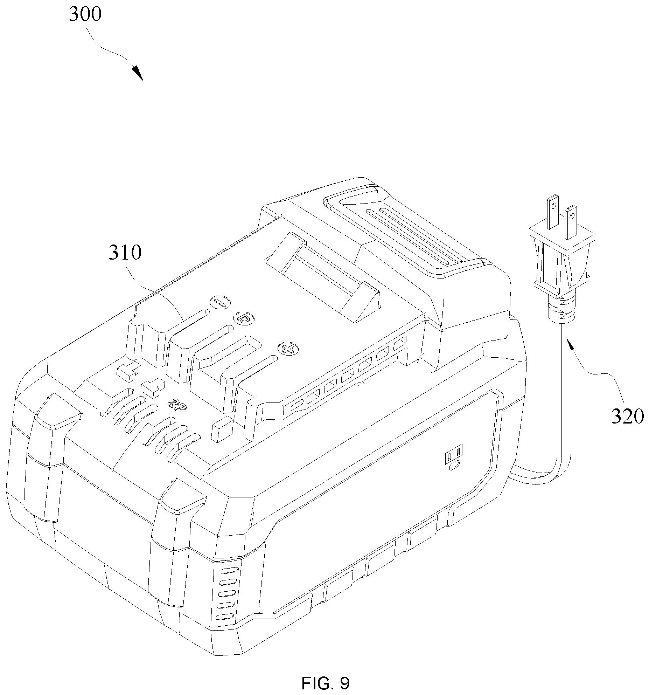

Referring to the battery pack 300 shown in FIG. 9, the present application provides an example that can solve the preceding problem. The portions in the preceding examples that are compatible with this example may be applied to the battery pack 300 in this example. Only the differences between this example and the preceding examples are described below.

In some examples, as shown in FIG. 9, the battery pack 300 includes a first interface 310 and a second interface 320. The first interface 310 is configured to connect the power tool 10, and the second interface 320 is configured to access external power. The control circuit 140 of the battery pack 300 is disposed in the battery housing 110. The control circuit 140 is electrically connected to the battery module 130, the first interface 310, and the second interface 320 separately and uses the battery module 130 or the external power to supply power to the power tool 10. In this example, when the electric quantity of the battery pack 300 is insufficient, the user may introduce the external power to supply power to the power tool 10, thereby continuing using the power tool 10 to work.

For example, the external power may be a commercially available alternating current. The user accesses the alternating current from a power grid to supply power to the power tool 10. The external power may be power supplied by an external power supply device independent of the battery pack 300. This power may be a direct current directly outputted by the external power supply device or an alternating current converted from the direct current. Optionally, the external power supply device may be a lithium-ion battery pack, a sodium-ion battery pack, or a battery pack constituted by both a lithium-ion battery and a sodium-ion battery. The external power supply device may be a silicon-carbon battery pack.

The first interface 310 of the battery pack 300 is configured to connect the tool body 200, and the second interface 320 of the battery pack 300 is configured to access the external power. The battery pack 300 has two signal states: a charging state and a discharging state. When the battery pack 300 is in the charging state, the second interface 320 receives external electrical energy to charge the battery pack 300. When the battery pack 300 is in the discharging state, the first interface 310 supplies the electrical energy from the battery pack 300 to the tool body 200. The battery pack 300 includes a detection terminal. The detection terminal is configured to detect a signal state of the first interface 310 and a signal state of the second interface 320. The first interface 310 has a discharging state and an idle state, and the second interface 320 has a charging state and an idle state. When the second interface 320 is connected to the external power, the detection terminal detects that the second interface 320 is in the charging state and sends a charging control signal to the control circuit 140 so that the external power is received to charge the battery pack 300. When the first interface 310 is connected to the power tool 10, the detection terminal detects that the first interface 310 is in the discharging state and sends a discharging control signal to the control circuit 140 so that the battery pack 300 supplies power to the power tool 10.

In some examples, the first interface 310 and the second interface 320 are on different planes. For example, the first interface 310 and the second interface 320 may be on two opposite surfaces of the battery housing 110. In some working conditions, the battery pack 300 may need to introduce the external power while powering the power tool 10. The first interface 310 and the second interface 320 are disposed on the two opposite surfaces of the battery housing 110 so that the user can be prevented from confusing the interfaces.

In some examples, the control circuit 140 is configured to control part of the external power to supply power to the power tool 10, control the battery pack 300 to stop supplying power to the power tool 10, and control part of the external power to charge the battery pack 300 after the second interface 320 accesses the external power. The battery pack 300 is charged while supplying power to the power tool 10, which shortens the life of the battery pack 300. After the external power is accessed, the battery pack 300 is caused to stop discharging electricity, and the external power is used for supplying power to the power tool 10. Thus, it can be ensured that the user continuously works, and the service life of the battery pack 300 is prevented from being shortened.

The present application provides an example of a battery pack 400 for the power tool 10. The battery pack 400 includes at least two different battery cells to meet the requirements of the power tool 10 in various working situations. The portions in the preceding examples that are compatible with this example may be applied to the battery pack 400 in this example. Only the differences between this example and the preceding examples are described below.

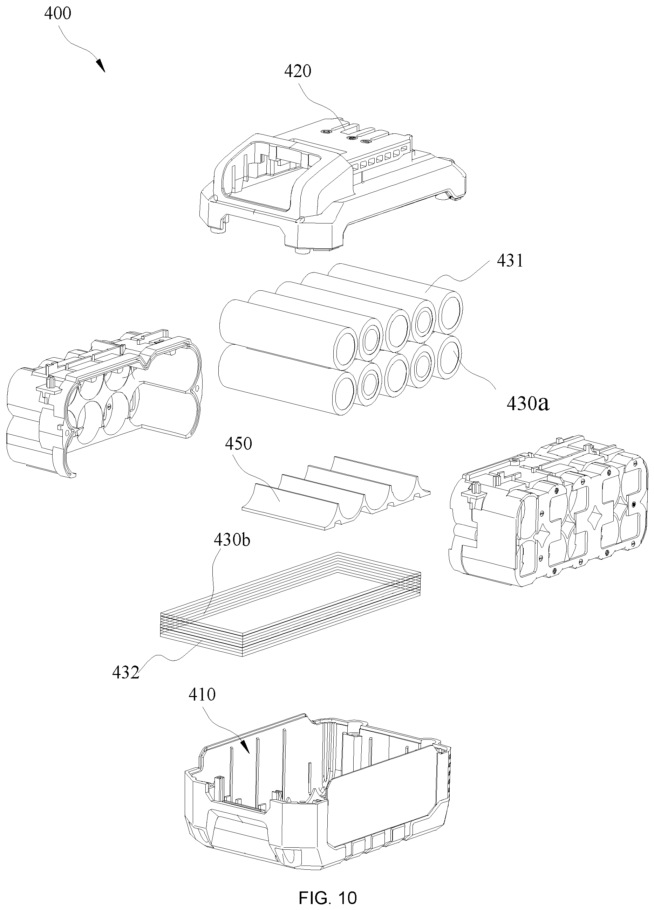

As shown in FIG. 10, in this example, a battery module 430 in the battery pack 400 may include at least first battery cells 431 and second battery cells 432. In this example, the first battery cells 431 and the second battery cells 432 are disposed in a battery housing 410 and are supported by the housing. The first battery cells 431 and the second battery cells 432 may be completely different from each other, or part of the characteristics of the first battery cells 431 and the second battery cells 432 are the same as each other. Exemplarily, each of the first battery cells 431 is a silicon-carbon battery, and each of the second battery cells 432 may be one of a sodium-ion battery, a semi-solid-state battery, a solid-state battery, or a lithium iron phosphate battery. The power density of each of the first battery cells 431 is greater than the power density of each of the second battery cells 432, and the energy density of each of the second battery cells 432 is greater than the energy density of each of the first battery cells 431. In an example, the power density of each of the first battery cells 431 is greater than or equal to 250 W/kg. The energy density of each of the second battery cells 432 is greater than or equal to 400 Wh/kg. In an example, each of the second battery cells 432 may be a lithium iron phosphate battery or a sodium-ion solid-state battery. In an example, the battery pack 400 further includes a terminal assembly 420. The terminal assembly 420 may include connection terminals. The connection terminals are electrically connected to the first battery cells 431 and the second battery cells 432 to transmit the electrical energy from the battery module to the power tool 10.

The battery module 430 in this example is constituted by silicon-carbon batteries and other batteries. Compared with the design in which all battery cells in the battery module are silicon-carbon batteries, the battery module 430 in this example has a stronger capability to adapt to different working environments and can allow the battery pack 400 to have a high energy density and support the power tool 10 to work in different working environments or working modes.

In an optional implementation, the first battery cells 431 may be connected in series or parallel to the second battery cells 432. In an optional implementation, the first battery cells 431 are connected in series to form a first branch, the second battery cells 432 are connected in series to form a second branch, and the first branch and the second branch are connected in parallel. In an optional implementation, the first battery cells 431 and the second battery cells 432 may be connected in parallel and then in series. In this example, other types of electrical connection manners may exist between the two types of battery cells and are not listed here one by one.

In an optional implementation, the first battery cells 431 and the second battery cells 432 may be completely different from each other or part of the characteristics of the first battery cells 431 and the second battery cells 432 are the same as each other. For example, each of the first battery cells 431 may have first energy and a first cycle life, and each of the second battery cells 432 may have second energy and a second cycle life. The so-called cycle life may refer to the number of charging and discharging cycles that a battery cell can perform while maintaining a certain energy output and may also be referred to as the service life of the battery. The first energy is different from the second energy, and the first cycle life is different from the second cycle life. In this example, the first cycle life is longer than the second cycle life, and the first energy is less than the second energy. In an example, the ratio of the first cycle life to the second cycle life is higher than or equal to 2, and the ratio of the first energy to the second energy is lower than or equal to 0.8. That is to say, each of the first battery cells 431 has the characteristics of a longer service life but less energy, and each of the second battery cells 432 has a shorter service life but greater energy.

In an optional implementation, as shown in FIG. 10, the battery module 430 may include at least a first module 430a and a second module 430b. The first battery cells 431 are connected to each other such that the first module 430a is formed. The second battery cells 432 are connected to each other such that the second module 430b is formed. The first module 430a and the second module 430b are electrically connected in series or parallel. The same type of battery cell is used in each of the first module 430a and the second module 430b, which can be convenient for the control circuit 140 to sample, detect, and perform consistency management on the batteries. In an example, the first module 430a supplies power to the power tool 10, and the second module 430b supplies power to the first module 430a. In an example, the second module 430b supplies power to the power tool 10, and the first module 430a supplies power to the second module 430b.

In an optional implementation, as shown in FIG. 10, the battery pack 400 may include a support member 450 configured to separate the first module 430a from the second module 430b and support the first module 430a and the second module 430b separately.

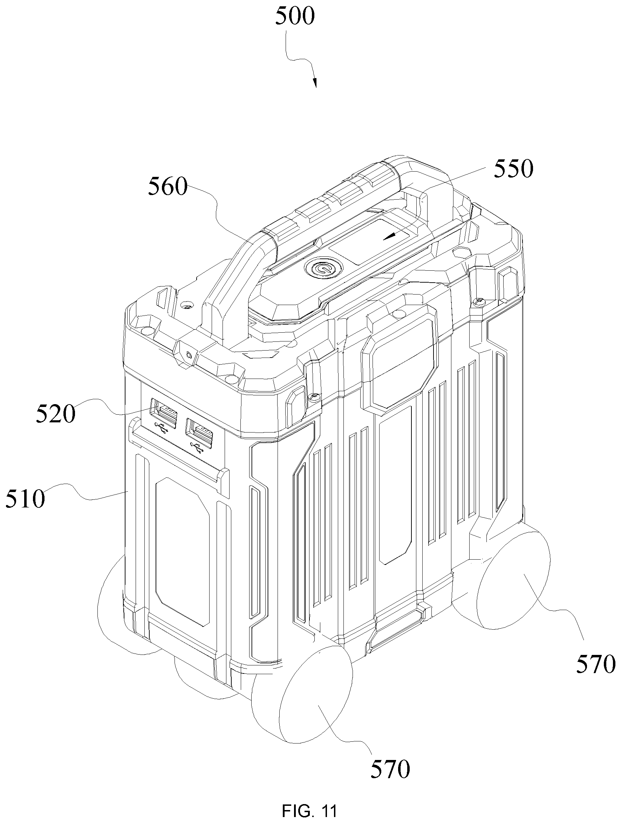

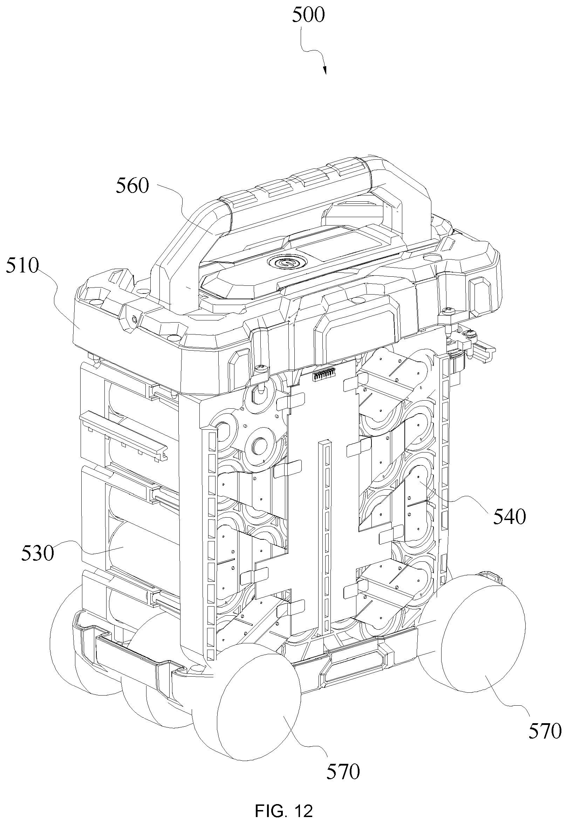

As shown in FIGS. 11 and 12, the present application provides an energy storage device 500, and the energy storage device 500 may include the silicon-carbon battery cell 131 in any one of the preceding examples. The shape of the energy storage device 500 is not limited in the present application, and the energy storage device 500 may be similar to a cuboid, a cylinder, or another three-dimensional structure. The portions in the preceding examples that are compatible with this example may be applied to this example.

The energy storage device 500 has a device housing 510. A tool interface 520 is provided on the device housing 510. The tool interface 520 is connectable to an interface or terminal on the power tool 10, a charger, or an adapter so that electrical energy stored in the energy storage device 500 is outputted to the power tool 10 or the energy storage device 500 is charged through the charger.

In this example, the energy storage device 500 includes a battery module 530. The battery module 530 may include at least one silicon-carbon battery cell 131 in any one of the preceding examples.

The energy storage device 500 further includes a control circuit 540 disposed in the device housing 510. The control circuit 540 is electrically connected to the battery module 530 and may be configured to monitor and control a charging process of the battery module 530 and a discharging process of the battery module 530.

In some examples, the ratio of the energy of the energy storage device 500 to the volume of the energy storage device 500 is higher than or equal to 35 Wh/m³. Thus, the use requirement of the user on the miniaturization of the energy storage device 500 can be met, and the energy storage device 500 avoids an excessively high requirement and is easy to manufacture.

In some examples, the energy storage device 500 further includes a display module 550 configured to display the number of remaining cycles of the battery module 530. The display module 550 is electrically connected to the control circuit 540. Exemplarily, the display module 550 can display the number of performed cycles of the battery module 530 or the number of remaining cycles of the battery module 530. Optionally, the display module 550 may include a display screen or a segment code screen. Exemplarily, the display screen may be a light-emitting diode (LED) display screen.

In some examples, the energy storage device 500 further includes a handle 560 to be held by the user conveniently. The handle 560 is disposed on a surface of the device housing 510. Optionally, the energy storage device 500 may include one or more handles 560 so that it is convenient to carry the energy storage device 500 from different directions through the handles 560. Exemplarily, the length of the portion of the handle 560 that can be held is greater than or equal to 6 cm so that the handle 560 is held by the user conveniently.

In some examples, the energy storage device 500 further includes traveling wheels 570 disposed on surfaces of the device housing 510. The energy storage device 500 may include one or more traveling wheels 570 so that it is convenient to push the energy storage device 500 from different directions through the traveling wheels 570.

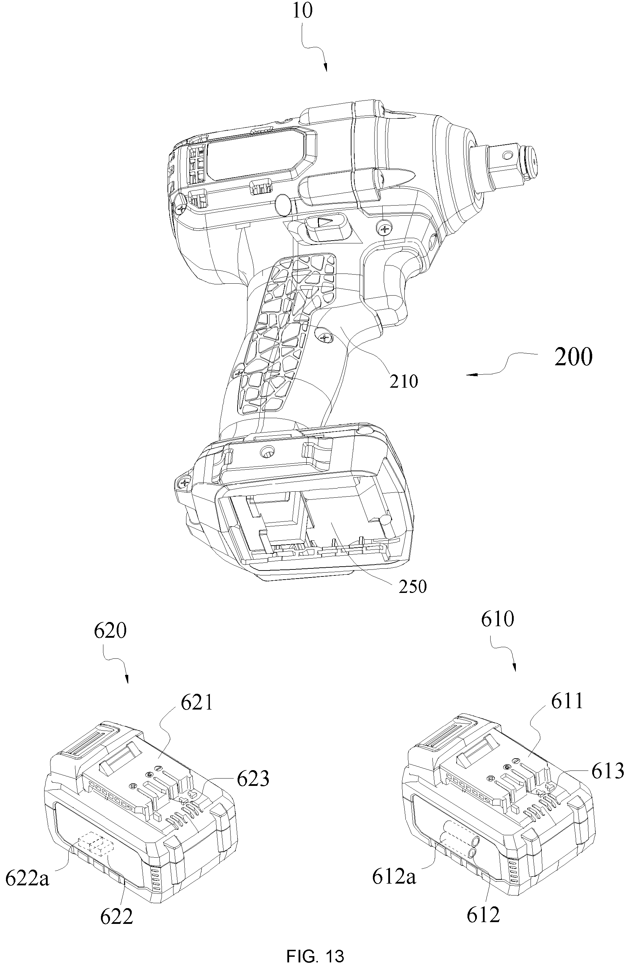

As shown in FIG. 13, the present application further provides the power tool 10 including the tool body 200 and a power supply module 600. The power supply module 600 is configured to supply power to the tool body 200, and the power supply module 600 includes a first battery pack 610 and a second battery pack 620. The portions in the preceding examples that are compatible with this example may be applied to this example, and only the differences between this example and the preceding examples are described below.

As shown in FIG. 13, in addition to the tool housing 210, the electric motor 220, a transmission unit 240, and the control module 230 shown in FIG. 6, the tool body 200 further includes a power interface. The power interface may include a terminal module 250 configured to access power supplied by the power supply module 600. The terminal module 250 may include connection terminals such as a positive terminal, a negative terminal, and a communication terminal. In this example, the terminal module 250 can be electrically connected to a terminal assembly 613 in the first battery pack 610 or a terminal assembly 623 in the second battery pack 620 so that power stored in the first battery pack 610 or the second battery pack 620 can be transmitted to the power tool 10. The control module 230 is configured to monitor and control a charging state of the power supply module 600 and a discharging state of the power supply module 600, where the control module 230 is electrically connected to the terminal module 250.

The first battery pack 610 includes a first battery pack housing 611 and a first battery module 612 disposed in the first battery pack housing 611. The first battery module 612 includes at least one first battery cell 612a, and the first battery cell 612a may be the silicon-carbon battery cell 131 in any one of the preceding examples. Exemplarily, the first battery cell 612a may be a 18650 cylindrical battery, a 2170 cylindrical battery, or a 4680 cylindrical battery.

The second battery pack 620 includes a second battery pack housing 621 and a second battery module 622 disposed in the second battery pack housing 621. The second battery module 622 includes at least one second battery cell 622a, and the second battery cell 622a may include one or more of a lithium-ion battery, a sodium-ion battery, a lead-acid battery, and a solid-state battery.

As described above, the battery cell of the first battery pack 610 has a different chemical property from that of the battery cell of the second battery pack 620. Therefore, if the second battery pack 620 is charged or discharged with a charging or discharging control method of the first battery pack 610, the safety performance of the second battery pack 620 may be reduced, and the life of the second battery pack 620 may be shortened.

In this example, the control module 230 is configured to: control the first battery pack to be charged and discharged with a first control method when the terminal module 250 is electrically connected to the first battery pack 610; and control the second battery pack 620 to be charged and discharged with a second control method when the terminal module 250 is electrically connected to the second battery pack 620. In this example, the first battery pack 610 is charged and discharged with the first control method, and the second battery pack 620 is charged and discharged with the second control method, thereby effectively avoiding damage to the first battery pack 610 or the second battery pack 620 caused by incorrect charging and discharging methods and prolonging the service life of the battery pack and the service life of the power tool 10.

In some examples, the control module 230 is configured to be capable of monitoring and displaying a battery characteristic of the first battery pack 610 and a battery characteristic of the second battery pack 620. Exemplarily, the battery characteristic of the first battery pack 610 and the battery characteristic of the second battery pack 620 may include a voltage and a battery temperature of the first battery pack 610 and a voltage and a battery temperature of the second battery pack 620.

In some examples, a connection structure of the first battery pack 610 electrically connected to the terminal module 250 is different from a connection structure of the second battery pack 620 electrically connected to the terminal module 250. The first battery pack 610 includes a first electrical connection structure electrically connected to the terminal module 250, such as the terminal assembly 613. The second battery pack 620 includes a second electrical connection structure electrically connected to the terminal module 250, such as the terminal assembly 623. The first electrical connection structure and the second electrical connection structure have different connection structures, and the control module 230 selects a control method for charging and discharging the power supply module 600 accordingly.

Exemplarily, when the terminal module 250 is electrically connected to the first electrical connection structure, the control module 230 determines that the terminal module 250 is connected to the first battery pack 610, and the power supply module 600 is charged and discharged with the first control method. When the terminal module 250 is electrically connected to the second electrical connection structure, the control module 230 determines that the terminal module 250 is connected to the second battery pack 620, and the power supply module 600 is charged and discharged with the second control method.

In some examples, the connection structure of the first battery pack 610 electrically connected to the terminal module 250 is the same as the connection structure of the second battery pack 620 electrically connected to the terminal module 250. However, since the first battery pack 610 and the second battery pack 620 include different battery cells, the first battery pack 610 and the second battery pack 620 have different battery characteristics. The first battery pack 610 has a first battery characteristic, and the second battery pack 620 has a second battery characteristic. The control module 230 is configured to be capable of identifying a battery characteristic of a battery pack electrically connected to the terminal module 250 and select a control method for charging and discharging the power supply module 600 accordingly.

Exemplarily, when the battery pack electrically connected to the terminal module 250 has the first battery characteristic, the control module 230 determines that the terminal module 250 is connected to the first battery pack 610, and the power supply module 600 is charged and discharged with the first control method. When the battery pack electrically connected to the terminal module 250 has the second battery characteristic, the control module 230 determines that the terminal module 250 is connected to the second battery pack 620, and the power supply module 600 is charged and discharged with the second control method.

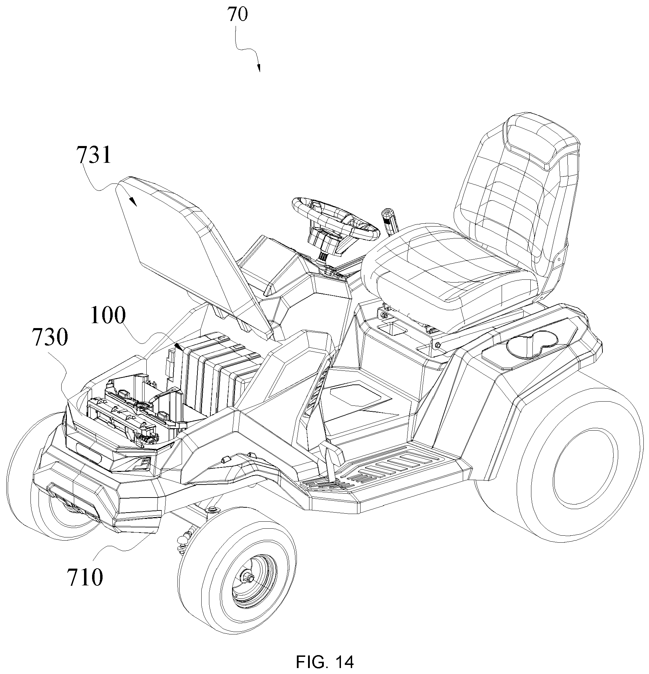

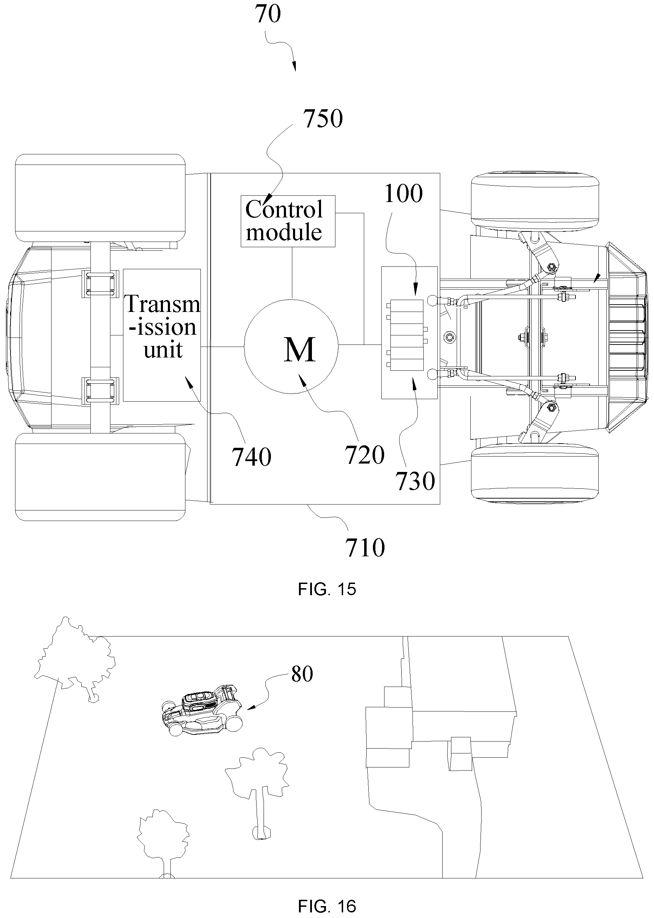

As shown in FIGS. 14 and 15, the present application further provides a power tool for gardens, such as a mower, a snow thrower, a blower, and a string trimmer. The portions in the preceding examples that are compatible with this example may be applied to this example, and only the differences between this example and the preceding examples are described below.

In this example, a riding mower 70 is used as an example for description. The riding mower 70 includes a tool body 700 and the battery pack 100, and the battery pack 100 is configured to supply power to the tool body 200.

The tool body 700 includes a tool housing 710, an electric motor 720, and a battery pack accommodation portion 730. The electric motor 720 is disposed in the tool housing 710 and receives power supplied by the battery pack 100. The battery pack accommodation portion 730 is configured to accommodate the battery pack 100. The battery pack 100 includes the silicon-carbon battery cell 131 in any one of the preceding examples. The battery pack 100 can be mounted in or removed from the battery pack accommodation portion 730. The silicon-carbon battery has the characteristic of a high energy density and can provide a higher energy density for the riding mower 70 than an ordinary lithium-ion battery having the same volume.

In an optional implementation, as shown in FIG. 14, the battery pack accommodation portion 730 includes a protection device. Optionally, the protection device includes a battery cover 731 that can be opened and closed.

In an example, the tool body 700 further includes a transmission unit 740 for transmitting power outputted by the electric motor 720. In an example, the riding mower 70 is operable in a temperature range of -30 degrees Celsius to 90 degrees Celsius.

In an example, the riding mower 70 further includes a control module 750 capable of controlling the battery pack 100 to supply power to the electric motor 720. The battery pack accommodation portion 730 includes a power interface. The power interface may include a terminal module configured to access power supplied by the battery pack 100. The terminal module may include connection terminals such as a positive terminal, a negative terminal, and a communication terminal. In this example, the terminal module can be electrically connected to the terminal assembly in the battery pack 100 so that the power stored in the battery pack 100 can be transmitted to the riding mower 70.

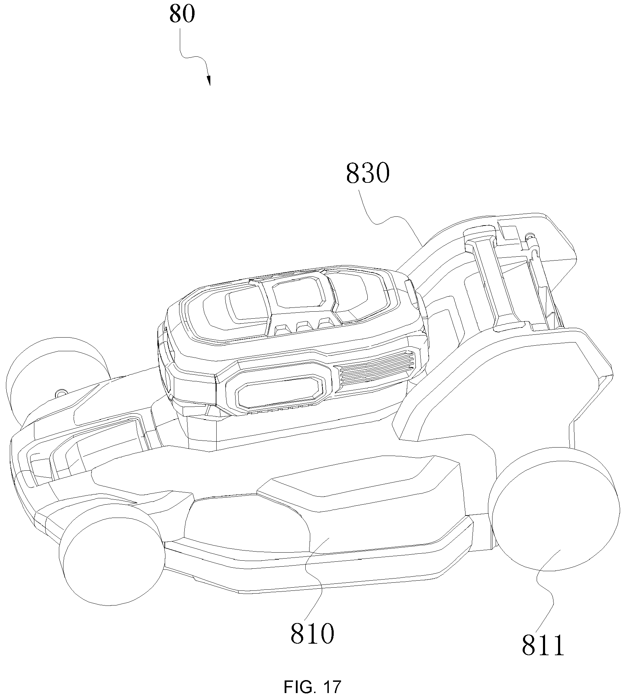

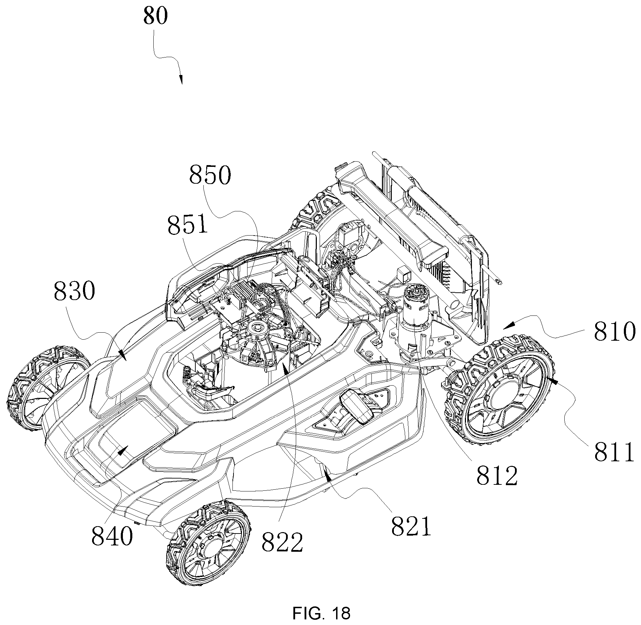

Referring to a robotic mower shown in FIGS. 16 to 18, the present application provides the robotic mower 80. The portions in the preceding examples that are compatible with this example may be applied to this example, and only the differences between this example and the preceding examples are described below.

The present application proposes a mowing system. With reference to FIG. 16, the mowing system includes an execution mechanism configured to trim vegetation. The execution mechanism is the hardware that allows the mowing system to perform a mowing function. Optionally, the execution mechanism is the robotic mower 80.

The robotic mower 80 includes at least a cutting assembly 820 configured to perform the mowing function and a traveling device 810 configured to perform a traveling function. The robotic mower 80 also includes a support body 840 and a machine housing 830. The machine housing 830 encases the support body 840, the cutting assembly 820, and the traveling device 810.

The traveling device 810 includes at least one driving wheel 811 and a first electric motor 812 configured to drive the at least one driving wheel 811. The first electric motor 812 supplies torque to the at least one driving wheel 811. Through the coordination of the cutting assembly 820 and the traveling device 810, the mowing system can control the robotic mower 80 to move and work on the vegetation. The first electric motor 812 may be a direct current motor.

The cutting assembly 820 includes a mowing element 821 and a second electric motor 822. The second electric motor 822 drives the mowing element 821 to rotate and trim the vegetation. The mowing element 821 may be a blade or another element capable of cutting and trimming a lawn. The second electric motor 822 may be a direct current motor.

A power supply device 850 is configured to supply power to the first electric motor 812 and the second electric motor 822. The energy storage device 870 includes an energy storage unit 851. The energy storage unit 851 includes any silicon-carbon battery in the preceding examples. The power supply device 850 is configured to supply power to the traveling device 810 and the cutting assembly 820. Optionally, the power supply device 850 is a pluggable battery pack mounted to the machine housing 830. Exemplarily, the power supply device 850 may be the battery pack in any of the preceding examples, and the energy storage unit 851 may be the battery cell in any of the preceding examples. The silicon-carbon battery has the characteristic of a high energy density and can provide a higher energy density for the robotic mower 80 than an ordinary lithium-ion battery having the same volume.

In some examples, the robotic mower 80 is operable in a temperature range of-20 degrees Celsius to 90 degrees Celsius. In some examples, the robotic mower 80 further includes a charging port. The charging port may be connected to another electrical energy source for charging. In some examples, a charging rate of the mower is 3C to 10C. The charging rate of a battery, also referred to as a charging and discharging rate, is typically represented by C and refers to the reciprocal of the charging or discharging time of the battery. For example, the capacity of the battery is 10 ampere-hours (A·h), and 1C means that the rated capacity is discharged in 1 hour. A charging rate of 3C to 10C means that the time required for the power supply device 850 to be fully charged to the rated capacity ranges from 1/10 hour to 1/3 hour. In some examples, the power supply device 850 adopts seal design to prevent water or dust.

In some examples, the robotic mower 80 further includes a control module, and the control module can control the robotic mower 80 to complete mowing by itself. Optionally, the control module can detect the electric quantity of the power supply device 850 and control the robotic mower 80 to travel to a charging pile for charging when the electric quantity of the power supply device 850 decreases to a preset threshold.

In some examples, in addition to using the power tool to charge the battery pack, the user may also use a dedicated charger or adapter to charge the battery pack of the power tool. However, batteries used by different power tools have different chemical properties, and even the same power tool may use two or more types of battery packs. If the charging method for the charger of the user is applicable to only one type of battery pack, another type of battery pack may be overcharged, and the cycle life of the battery pack is shortened.

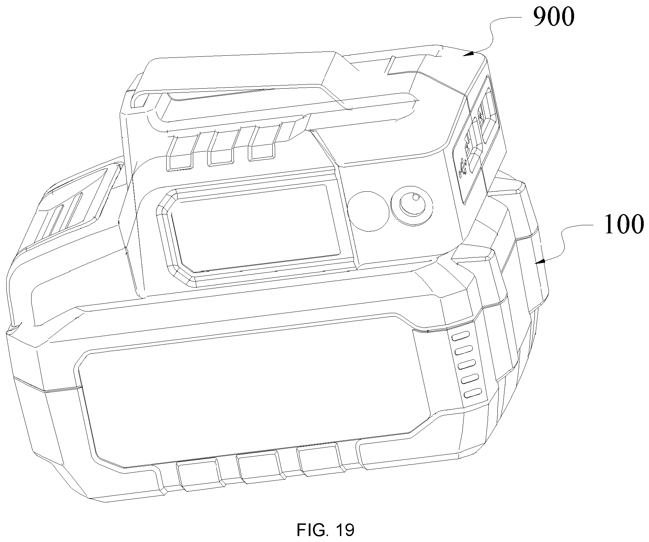

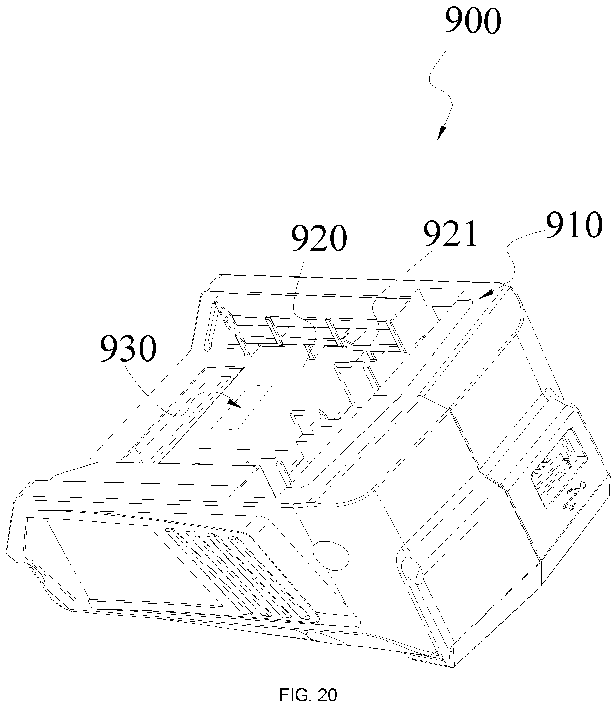

As shown in FIGS. 19 and 20, the present application provides a charger 900 configured to charge different types of battery packs of the power tool 10. The power tool 10 includes at least two different types of battery packs: the first battery pack 610 and the second battery pack 620. The portions in the preceding examples that are compatible with this example may be applied to this example, and only the differences between this example and the preceding examples are described below.

For example, the charger 900 charges two different types of battery packs: the first battery pack 610 and the second battery pack 620. The charger 900 includes a charger housing 910, a battery pack interface 920, and a charging control module 930. The battery pack interface 920 may include a charger terminal module 921 for the first battery pack 610 or the second battery pack 620. The charger terminal module 921 may include connection terminals such as a positive terminal, a negative terminal, and a communication terminal. In this example, the charger terminal module 921 can be electrically connected to a terminal assembly in the first battery pack 610 or a terminal assembly in the second battery pack 620 to charge the first battery pack 610 or the second battery pack 620. The charging control module 930 is configured to monitor and control a charging of the first battery pack 610 or the second battery pack 620 and a discharging state of the first battery pack 610 or the second battery pack 620, and the charging control module 930 is electrically connected to the charger terminal module 921.

In this example, the charging control module 930 is configured to: control the first battery pack to be charged with a first charging method when the charger terminal module 921 is electrically connected to the first battery pack 610; and control the second battery pack 620 to be charged with a second charging method when the charger terminal module 921 is electrically connected to the second battery pack 620. In this example, the first battery pack 610 is charged with the first charging method, and the second battery pack 620 is charged with the second charging method, thereby effectively avoiding damage to the first battery pack 610 or the second battery pack 620 caused by incorrect charging methods and prolonging the service life of the battery pack and the service life of the power tool 10.

In some examples, the charging control module 930 is configured to be capable of monitoring and displaying the battery characteristic of the first battery pack 610 and the battery characteristic of the second battery pack 620. Exemplarily, the battery characteristic of the first battery pack 610 and the battery characteristic of the second battery pack 620 may include the voltage and battery temperature of the first battery pack 610 and the voltage and battery temperature of the second battery pack 620.

In some examples, a connection structure of the first battery pack 610 electrically connected to the charger terminal module 921 is different from a connection structure of the second battery pack 620 electrically connected to the charger terminal module 921. The first battery pack 610 includes a first electrical connection structure electrically connected to the charger terminal module 921. The second battery pack 620 includes a second electrical connection structure electrically connected to the charger terminal module 921. The first electrical connection structure and the second electrical connection structure have different connection structures, and the charging control module 930 selects a charging method accordingly.

Exemplarily, when the charger terminal module 921 is electrically connected to the first electrical connection structure, the charging control module 930 determines that the charger terminal module 921 is connected to the first battery pack 610, and the battery pack electrically connected to the charger terminal module 921 is charged with the first charging method. When the charger terminal module 921 is electrically connected to the second electrical connection structure, the charging control module 930 determines that the charger terminal module 921 is connected to the second battery pack 620, and the battery pack electrically connected to the charger terminal module 921 is charged with the second charging method.

In some examples, the connection structure of the first battery pack 610 electrically connected to the charger terminal module 921 is the same as the connection structure of the second battery pack 620 electrically connected to the charger terminal module 921. However, since the first battery pack 610 and the second battery pack 620 include different battery cells, the first battery pack 610 and the second battery pack 620 have different battery characteristics. The first battery pack 610 has the first battery characteristic, and the second battery pack 620 has the second battery characteristic. The charging control module 930 is configured to be capable of identifying a battery characteristic of the battery pack electrically connected to the charger terminal module 921 and select a charging method accordingly.

Exemplarily, when the battery pack electrically connected to the charger terminal module 921 has the first battery characteristic, the charging control module 930 determines that the charger terminal module 921 is connected to the first battery pack 610, and the battery pack electrically connected to the charger terminal module 921 is charged with the first charging method. When the battery pack electrically connected to the charger terminal module 921 has the second battery characteristic, the charging control module 930 determines that the charger terminal module 921 is connected to the second battery pack 620, and the battery pack electrically connected to the charger terminal module 921 is charged with the second charging method.

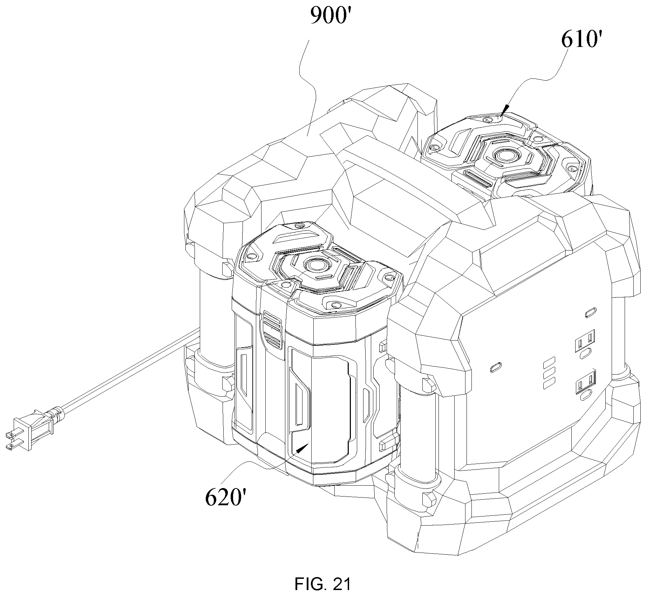

In other examples, as shown in FIG. 21, a charger 900' may simultaneously charge two different types of battery packs: a first battery pack 610' and a second battery pack 620'.

## Claims

1. A silicon-carbon battery cell for a power tool, comprising:
a positive electrode plate;
a negative electrode plate comprising a silicon material, a carbon material, and a binder; and
an electrolyte disposed between the negative electrode plate and the positive electrode plate;
wherein the binder comprises polyacrylic acid and styrene-butadiene rubber.

2. The silicon-carbon battery cell according to claim 1, wherein a content of the silicon material in the negative electrode plate is 1% to 5%.

3. The silicon-carbon battery cell according to claim 1, wherein a content of the polyacrylic acid in a material of the binder is 0.2% to 1.5%.

4. The silicon-carbon battery cell according to claim 1, wherein a material of the positive electrode plate comprises lithium nickel manganese cobalt oxide, carbon black, a carbon nanotube, sodium carboxymethyl cellulose, and styrene-butadiene rubber.

5. The silicon-carbon battery cell according to claim 1, wherein a material of the electrolyte comprises lithium hexafluorophosphate.

6. The silicon-carbon battery cell according to claim 1, wherein the silicon-carbon battery cell has a cylindrical or prismatic shape.

7. The silicon-carbon battery cell according to claim 1, wherein the silicon-carbon battery cell is a pouch cell.

8. A silicon-carbon battery cell for a power tool, comprising:
a positive electrode plate;
a negative electrode plate; and
an electrolyte disposed between the negative electrode plate and the positive electrode plate;
wherein a surface of the negative electrode plate comprises a microbubble structure.

9. The silicon-carbon battery cell according to claim 8, wherein slurry coated on the negative electrode plate contains a foaming agent.

10. The silicon-carbon battery cell according to claim 8, wherein a material of the negative electrode plate comprises silicon-carbon, graphite, carbon black, a carbon nanotube, sodium carboxymethyl cellulose, and styrene-butadiene rubber.

11. The silicon-carbon battery cell according to claim 8, wherein a material of the positive electrode plate comprises lithium nickel manganese cobalt oxide, carbon black, a carbon nanotube, sodium carboxymethyl cellulose, and styrene-butadiene rubber.

12. The silicon-carbon battery cell according to claim 8, wherein a material of the electrolyte comprises lithium hexafluorophosphate.

13. The silicon-carbon battery cell according to claim 8, wherein a capacity of the battery cell is greater than or equal to 5 ampere-hours.

14. The silicon-carbon battery cell according to claim 8, wherein the battery cell has a cylindrical or prismatic shape.

15. The silicon-carbon battery cell according to claim 8, wherein the battery cell is a pouch cell.

16. A battery pack for a power tool, comprising:
a battery housing;
a battery module disposed in an inner cavity of the battery housing, wherein the battery module comprises a plurality of battery cells;
a support member configured to support the plurality of battery cells and apply pressure to the plurality of battery cells;
a control circuit configured to monitor and control a charging process of the battery module and a discharging process of the battery module; and
a tool interface configured to be connected to the power tool, wherein the tool interface is electrically connected to the control circuit;
wherein the battery module comprises at least one silicon-carbon battery cell.

17. The battery pack according to claim 16, wherein the plurality of battery cells have a cylindrical or prismatic shape.

18. The battery pack according to claim 16, wherein the plurality of battery cells are pouch cells.

19. The battery pack according to claim 16, wherein a shape of the support member matches a shape of each of the plurality of battery cells.

20. The battery pack according to claim 16, wherein a gap between the support member and each of the plurality of battery cells is less than or equal to 0.5 millimeters.

21. The battery pack according to claim 16, wherein the support member is made of metal or plastic.

22. A battery pack for a power tool, comprising:
a battery housing;
a battery module disposed in an inner cavity of the battery housing, wherein the battery module comprises a plurality of battery cells;
a control circuit configured to monitor and control a charging state of the battery module and a discharging state of the battery module; and
a tool interface configured to be electrically connected to the power tool, wherein the tool interface is electrically connected to the control circuit;
wherein the battery module comprises at least one silicon-carbon battery cell; and
a ratio of a length of the battery pack to a thickness of the battery pack is 1 to 10, and energy W of the battery pack and a volume V1 of the battery pack satisfy the following:
in a case where the energy W of the battery pack is greater than or equal to 200 W, the volume V1 of the battery pack is less than or equal to 350 cubic centimeters;
in a case where the energy W of the battery pack is greater than or equal to 300 W, the volume V1 of the battery pack is less than or equal to 550 cubic centimeters; and
in a case where the energy W of the battery pack is greater than or equal to 700 W, the volume V1 of the battery pack is less than or equal to 1200 cubic centimeters.

23. The battery pack according to claim 22, wherein a gap between battery cells among the plurality of battery cells is less than or equal to 0.5 millimeters.

24. The battery pack according to claim 22, wherein the plurality of battery cells have a cylindrical or prismatic shape.

25. The battery pack according to claim 22, wherein the plurality of battery cells are pouch cells.

26. The battery pack according to claim 22, wherein at least two of the plurality of battery cells have different shapes.

27. An energy storage device, comprising:
a device housing;
a battery module disposed in an inner cavity of the device housing, wherein the battery module comprises a plurality of battery cells; and
a control circuit configured to monitor and control a charging state of the battery module and a discharging state of the battery module;
wherein the battery module comprises at least one silicon-carbon battery cell; and
the energy storage device further comprises:
a display module configured to display a number of remaining cycles of the battery module, wherein the display module is electrically connected to the control circuit.

28. The energy storage device according to claim 27, wherein the display module comprises a display screen.

29. The energy storage device according to claim 27, wherein the display module comprises a segment code screen.

30. The energy storage device according to claim 27, wherein the display module is configured to display a number of performed cycles of the battery module.

31. A power tool, comprising:
a tool housing;
a power supply module comprising a first battery pack and a second battery pack;
a terminal module electrically connected to the power supply module; and
a control module configured to monitor and control a charging state of the power supply module and a discharging state of the power supply module, wherein the control module is electrically connected to the terminal module;
wherein the first battery pack comprises a silicon-carbon battery; and
the control module is configured to:
control the first battery pack to be charged and discharged with a first control method in a case where the terminal module is electrically connected to the first battery pack; and
control the second battery pack to be charged and discharged with a second control method in a case where the terminal module is electrically connected to the second battery pack.

32. The power tool according to claim 31, wherein the terminal module comprises a positive terminal, a negative terminal, and a communication terminal.

33. The power tool according to claim 31, wherein the control module is further configured to monitor and display a battery characteristic of the first battery pack and/or a battery characteristic of the second battery pack.

34. The power tool according to claim 31, wherein the battery characteristic of the first battery pack and/or the battery characteristic of the second battery pack comprise a voltage and a temperature of the first battery pack and/or a voltage and a temperature of the second battery pack.

35. The power tool according to claim 31, wherein
the first battery pack comprises a first electrical connection structure electrically connected to the power tool; and
the second battery pack comprises a second electrical connection structure electrically connected to the power tool;
wherein the first electrical connection structure and the second electrical connection structure have different connection structures.

36. The power tool according to claim 35, wherein the control module is configured to:
control the power supply module to be charged and discharged with the first control method in a case where the terminal module is electrically connected to the first electrical connection structure; and
control the power supply module to be charged and discharged with the second control method in a case where the terminal module is electrically connected to the second electrical connection structure.

37. The power tool according to claim 31, wherein
a structure electrically connecting the first battery pack to the power tool is the same as a structure electrically connecting the second battery pack to the power tool;
the first battery pack has a first battery characteristic;
the second battery pack has a second battery characteristic; and
the control module is further configured to identify a battery characteristic of a battery pack electrically connected to the terminal module.

38. The power tool according to claim 37, wherein the control module is configured to:
control the power supply module to be charged and discharged with the first control method in a case where the battery pack electrically connected to the terminal module has the first battery characteristic; and
control the power supply module to be charged and discharged with the second control method in a case where the battery pack electrically connected to the terminal module has the second battery characteristic.

39. The power tool according to claim 38, wherein the battery characteristic comprises a voltage and a temperature of the first battery pack and/or a voltage and a temperature of the second battery pack.

40. The power tool according to claim 31, wherein the second battery pack comprises at least one battery cell from a lithium-ion battery, a sodium-ion battery, a lead-acid battery, and a silicon-carbon battery.

41. A charger for a battery pack of a power tool, wherein the power tool comprises a first battery pack and a second battery pack; and
the charger comprises:
a charger housing;
a charger terminal module configured to be electrically connected to the battery pack; and
a charging control module configured to monitor and control a charging state of the battery pack electrically connected to the charger terminal module, wherein the charging control module is electrically connected to the charger terminal module;
wherein the first battery pack comprises a silicon-carbon battery; and
the charging control module is configured to:
control the first battery pack to be charged with a first charging method in a case where the charger terminal module is electrically connected to the first battery pack; and
control the second battery pack to be charged with a second charging method in a case where the charger terminal module is electrically connected to the second battery pack.

42. The charger according to claim 41, wherein the charging control module is further configured to monitor and display a battery characteristic of the battery pack electrically connected to the charger terminal module.

43. The charger according to claim 42, wherein the battery characteristic comprises a voltage and a temperature of the battery pack electrically connected to the charger terminal module.

44. The charger according to claim 41, wherein
the first battery pack comprises a first electrical connection structure configured to be electrically connected to the power tool; and
the second battery pack comprises a second electrical connection structure configured to be electrically connected to the power tool;
wherein the first electrical connection structure and the second electrical connection structure have different connection structures; and
the charging control module is configured to:
control the battery pack to be charged and discharged with the first charging method in a case where the charger terminal module is electrically connected to the first electrical connection structure; and
control the battery pack to be charged and discharged with the second charging method in a case where the charger terminal module is electrically connected to the second electrical connection structure.

45. The charger according to claim 41, wherein
a structure electrically connecting the first battery pack to the power tool is the same as a structure electrically connecting the second battery pack to the power tool;
the first battery pack has a first battery characteristic;
the second battery pack has a second battery characteristic;
the first battery characteristic and/or the second battery characteristic comprise a voltage and a temperature of the first battery pack and/or a voltage and a temperature of the second battery pack; and
the charging control module is further configured to identify a battery characteristic of the battery pack electrically connected to the charger terminal module.

46. The charger according to claim 45, wherein the charging control module is configured to:
control the battery pack to be charged with the first charging method in a case where the battery pack electrically connected to the charger terminal module has the first battery characteristic; and
control the battery pack to be charged with the second charging method in a case where the battery pack electrically connected to the charger terminal module has the second battery characteristic.

47. The charger according to claim 41, wherein the second battery pack comprises at least one battery cell from a lithium-ion battery, a sodium-ion battery, a lead-acid battery, and a silicon-carbon battery.
